# EUROPEAN PATENT APPLICATION

(11) **EP 0 624 819 A1**
(43) Date of publication of application: **17.11.1994**
(21) Application number: 94107548.3
(22) Date of filing: 16.05.1994
(51) Int. Cl.: G03B 19/04, G03B 17/20

(54) **Single-use camera with indicator lamp visible via light pipe**

(30) Priority: 14.05.1993 US 61886
(71) Applicant: EASTMAN KODAK COMPANY, Rochester, New York 14650-2201 (US)
(72) Inventor: VandeMoere, Alan Victor, c/o Eastman Kodak Comp., Rochester, New York 14650-2201 (US); Alligood, John Horrace, c/o Eastman Kodak Comp., Rochester, New York 14650-2201 (US)
(74) Representative: Blickle, K. Werner, Dipl.-Ing.

(57) **Abstract**

A single-use camera (1) comprises a camera inner body (3) which light-tightly contains a photographic film and has a non-opaque portion (13) that includes an integrally formed viewfinder lens for viewing a subject to be photographed, and an outer opaque decorative casing (5) having an opening for the viewfinder lens (13). According to the invention, the inner body supports an indicator lamp (37) for providing illumination to visibly indicate a camera-related condition, and the non-opaque portion includes an integrally formed light pipe (51) longitudinally extending between the indicator lamp and the viewfinder lens for transmitting illumination from the indicator lamp towards the viewfinder lens to be observed when looking through the viewfinder lens.

## Description

### CROSS-REFERENCE TO RELATED APPLICATION(S)

Reference is made to commonly assigned copending application Serial No. 08/004870, entitled PHOTOGRAPHIC FILM PACKAGE WITH ANTI-REFLECTION SUBSTANCE FOR VIEWFINDER and filed January 19, 1993 in the name of Alan V. VanDeMoere.

### FIELD OF THE INVENTION

This invention relates generally to the field of photography, and more particularly to single-use or disposable cameras. Specifically, the invention relates to a single-use camera with an indicator lamp whose illumination is visible via a light pipe in the camera viewfinder.

### BACKGROUND OF THE INVENTION

Single-use or disposable cameras have become well known. Generally, each single-use camera is a point-and-shoot type that comprises a camera inner body and a paper-cardboard outer packaging or casing that tightly encases the inner body. The inner body houses or supports the various camera components such as a fixed-focus taking lens, a film advance and metering mechanism, a shutter, a simple see-through viewfinder, a frame or exposure counter, a manual film advance thumbwheel, etc. The outer packaging has respective openings for the taking lens, the viewfinder, the frame counter, the thumbwheel, and a manual release for the shutter. At the manufacturer, the camera body is loaded with a conventional 35 mm film cartridge, and substantially the entire length of the unexposed filmstrip is factory pre-wound from the cartridge into a supply chamber of the camera body. After the photographer takes a picture, the thumbwheel is manually rotated to rewind the exposed frame into the cartridge. The rewinding movement of the filmstrip the equivalent of one frame rotates a metering sprocket to decrement the frame counter to its next numbered setting. When the filmstrip is fully exposed and completely rewound into the cartridge, the single-use camera is sent to a photofinisher who processes the filmstrip to make photographic prints and recycles certain camera parts.

Prior art U.S. Pat. No. 4,812,866, issued Mar. 14, 1989, discloses a single-use camera comprising an opaque main body section pre-loaded with a roll film and including the shutter and the taking lens, an opaque back cover section attached to the rear of the main body section to light-tightly shield the film, and a transparent front cover section attached to the front of the main body section and having an integral single-element taking lens or an integral single-element finder lens. A cardboard opaque box tightly encases the main body section and the front and rear cover sections, and has a front opening for the single-element taking or finder lens.

The cross-referenced application discloses a single-use camera comprising a camera body pre-loaded with a roll film and including a non-opaque top section having an integral front finder lens for viewing a subject to be photographed, and an outer opaque packaging tightly encasing the camera body and having a front opening for the front finder lens. The outer packaging is coated with a light-absorbent substance along its inside surface, which is sufficiently absorbent to prevent ambient light transmitted through the front finder lens from being reflected off the inside surface at least to the front finder lens. Consequently, the peripheral edge of the front finder lens will not appear to have undesireable bright spots.

### PROBLEM(S) TO BE SOLVED BY THE INVENTION

Other, i.e. non-single-use, cameras such as disclosed in U.S. Pat. No. 3,791,273, issued Feb. 12, 1974, are known to include a light pipe in the viewfinder between an indicator lamp and a viewfinder lens. This arrangement, however, occupies significant space and, therefore, increases the camera size. Since it is desireable to make single-use cameras more compact than other cameras, they have not included any known light pipe construction.

### SUMMARY OF THE INVENTION

According to the invention, a single-use camera comprising a camera inner body which light-tightly contains a photographic film and has a non-opaque portion that includes an integrally formed viewfinder lens for viewing a subject to be photographed, and an outer opaque decorative casing having an opening for the viewfinder lens, is characterized in that:
the inner body supports an indicator lamp for providing illumination to visibly indicate a camera-related condition; and
the non-opaque portion includes an integrally formed light pipe longitudinally extending between the indicator lamp and the viewfinder lens for transmitting illumination from the indicator lamp towards the viewfinder lens to be observed when looking through the viewfinder lens.

Preferably, the camera inner body and the outer casing have respective aligned openings located close to the indicator lamp to alternatively view illumination provided by the indicator lamp without looking through the viewfinder lens.

### ADVANTAGEOUS EFFECT(S) OF THE INVENTION

By making the light pipe integral with the non-opaque portion of the camera inner body, the desireable compactness of the single-use camera is retained.

### BRIEF DESCRIPTION OF THE DRAWINGS

FIG. 1 is a rear exploded perspective view of a single-use camera according to a preferred embodiment of the invention, showing the camera inner body removed from the outer casing with a non-opaque top body portion and a rear opaque body portion separated from a main opaque body portion;
FIG. 2 is a front exploded perspective view of the single-use camera, showing the camera inner body removed from the outer casing with the non-opaque top portion separated from the main opaque body portion; and
FIG. 3 is a plan view of the outer casing laid flat in an unfolded state and shown from its inside.

### DETAILED DESCRIPTION OF THE INVENTION

The invention is disclosed as being embodied preferably in a single-use or disposable camera. Because the features of a single-use camera have become generally known, the description which follows is directed in particular only to those elements forming part of or cooperating with the invention. It is to be understood, however, that other elements not specifically shown or described may take various forms known to a person of ordinary skill in the art.

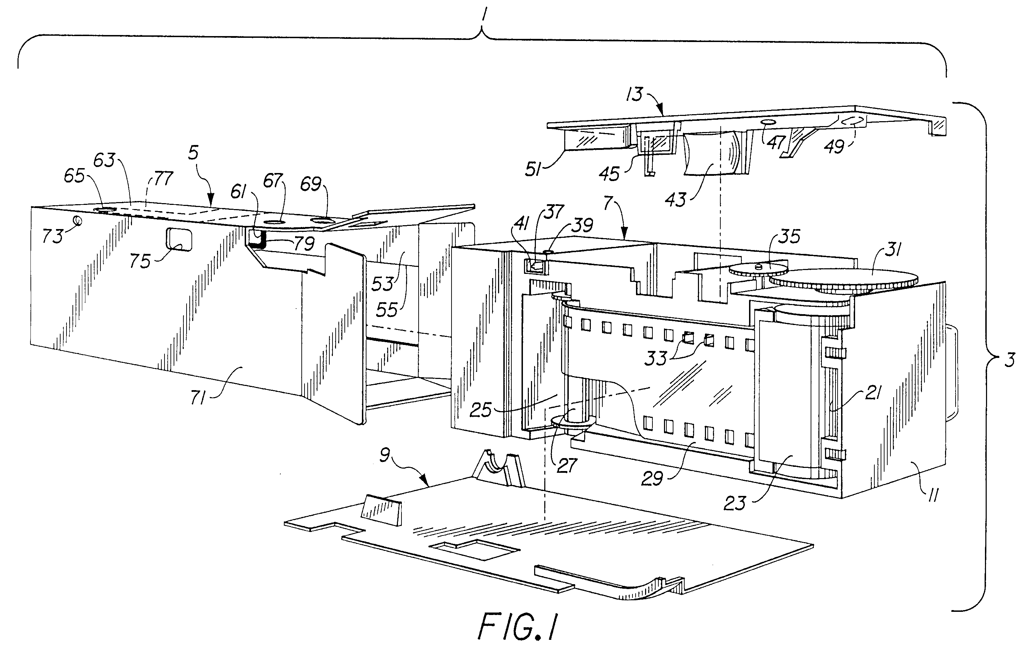

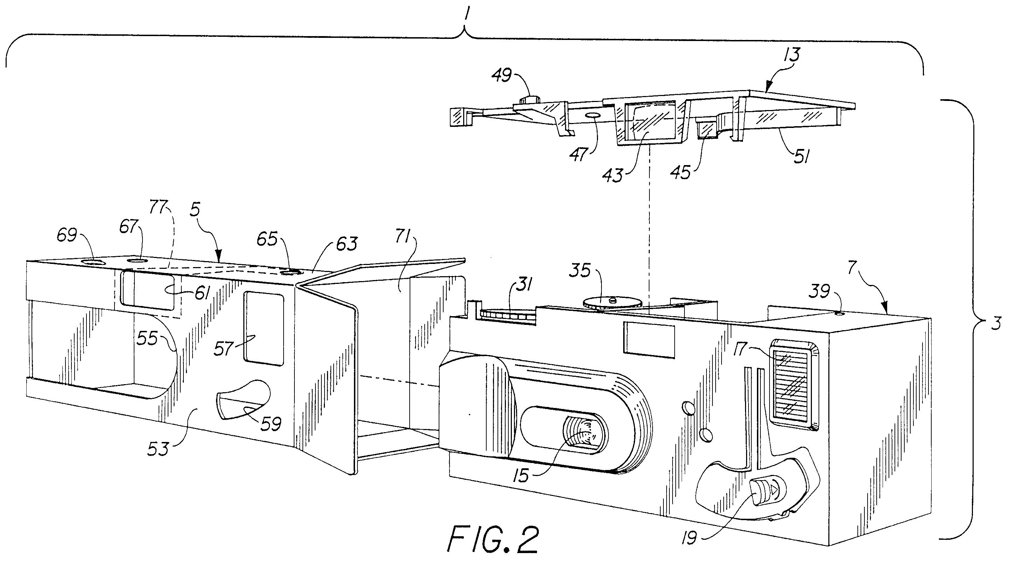

Referring now to the drawings, FIGS. 1 and 2 depict a single-use or disposable camera 1 comprising a plastic camera inner body 3 and a paper-cardboard outer decorative casing 5 that tightly encases the inner body.

The camera inner body 3 has a main opaque body portion 7, a rear opaque body portion 9 separable from the main body portion, an end opaque body portion 11 separable from the main body portion, and a non-opaque, i.e. translucent or transparent, top body portion 13.

As can be seen in FIG. 2, the main body portion 7 supports a fixed-focus taking lens 15 and an electronic flash unit 17, and includes an integrally formed manually actuated flash charging switch lever 19. As can be seen in FIG. 1, the main body portion 7 has a loading chamber 21 for a conventional 35 mm film cartridge 23, and a separate chamber 25 for a film spool 27 on which a substantial length of an unexposed filmstrip 29 is pre-wound from the cartridge. After each picture is taken, a thumbwheel 31 is manually rotated to rewind the exposed frame into the cartridge 23. The rewinding movement of the filmstrip 29 the equivalent of one frame rotates a metering sprocket 33 to decrement a frame counter 35 to its next numbered setting.

An indicator or ready lamp 37 supported inside the main body portion 7 is connected to the electronic flash unit 17 to provide illumination that indicates the capacitor, not shown, of the flash unit is sufficently charged to take a flash picture. As is well known, the lamp 37 can be made to blink when the capacitor is sufficently charged. Two openings 39 and 41, one on the top of the main body portion 7 and the other at the back of the main body portion, are provided to view the lamp 37.

The top body portion 13 has an integrally formed (transparent) front viewfinder lens 43 and an integrally formed (transparent) rear viewfinder lens 45 which hang down from the top body portion in optical alignment with each other, an integrally formed top magnifier lens 47 located over the frame counter 35, and an integrally formed top shutter release cantilevered push button 49. Also, the top body portion 13 has an integrally formed (transparent) light pipe 51 longitudinally extending between the indicator lamp 37 and the rear viewfinder lens 45 for transmitting illumination from the lamp to the rear viewfinder lens to be observed when looking through that lens.

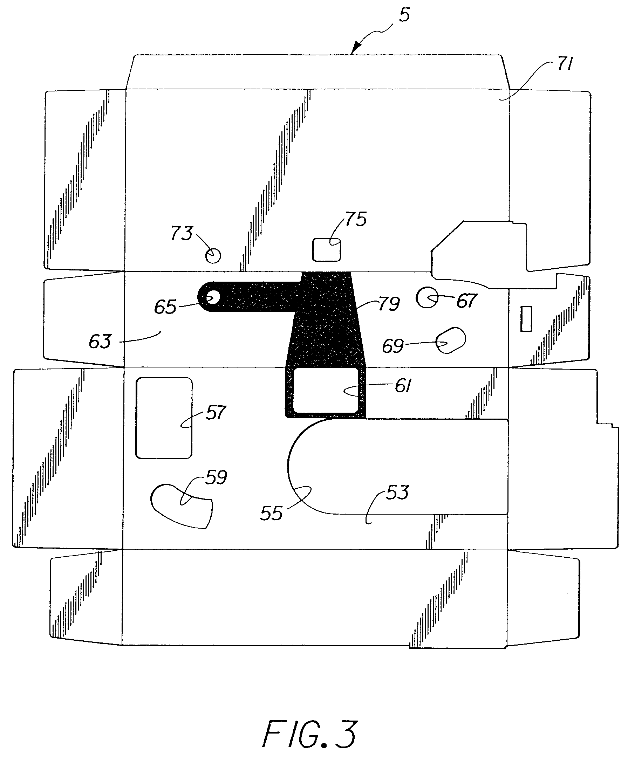

As can be seen in FIGS. 1-3, the outer casing 5 has a front wall section 53 with respective openings 55, 57, 59, and 61 for the taking lens 15, the electronic flash unit 17, the flash charging switch lever 19, and the front viewfinder lens 43, a top wall section 63 with respective openings 65, 67, and 69 for the top opening 39 for the indicator lamp 37, the magnifier lens 47, and the shutter release push button 49, and a rear wall section 71 with respective openings 73 and 75 for the back opening 41 for the lamp and the rear viewfinder lens 45. An inside surface 77 of the top wall section 63, shown in FIG. 3, is coated with a light-absorbent substance 79, such as dull black ink or paint, between the openings 61, 65, and 75 to prevent ambient light received through the front and rear viewfinder lenses 43 and 45 from reflecting off the inside surface onto the light pipe 51. This makes illumination transmitted by the light pipe 51 from the lamp 37 more sharply visible through the rear viewfinder lens 45.

The invention has been described with reference to a preferred embodiment. However, it will be appreciated that variations and modifications can be effected by a person of ordinary skill in the art without departing from the scope of the invention.

### PARTS LIST FOR FIGS. 1-3

- 1.: single-use camera
- 3.: inner body
- 5.: outer casing
- 7.: main opaque body portion
- 9.: rear opaque body portion
- 11.: end opaque body portion
- 13.: non-opaque top body portion
- 15.: taking lens
- 17.: flash unit
- 19.: flash charging switch lever
- 21.: loading chamber
- 23.: film cartridge
- 25.: separate chamber
- 27.: film spool
- 29.: filmstrip
- 31.: thumbwheel
- 33.: metering sprocket
- 35.: frame counter
- 37.: indicator lamp
- 39.: top opening for lamp 37
- 41.: back opening for lamp 37
- 43.: front viewfinder lens
- 45.: rear viewfinder lens
- 47.: top magnifier lens
- 49.: top push button
- 51.: light pipe
- 53.: front wall section
- 55.: front opening for taking lens 15
- 57.: front opening for flash unit 17
- 59.: front opening for lever 19
- 61.: front opening for front viewfinder lens 43
- 63.: top wall section
- 65.: top opening for top opening 39
- 67.: top opening for magnifier lens 47
- 69.: top opening for push button 49
- 71.: rear wall section
- 73.: rear opening for back opening 41
- 75.: rear opening for rear viewfinder lens 45
- 77.: inside surface
- 79.: light-absorbent substance

## Claims

1. A single-use camera comprising a camera inner body which light-tightly contains a photographic film and has a non-opaque portion that includes an integrally formed viewfinder lens for viewing a subject to be photographed, and an outer opaque decorative casing having an opening for said viewfinder lens, is characterized in that:
said inner body supports an indicator lamp for providing illumination to visibly indicate a camera-related condition; and
said non-opaque portion includes an integrally formed light pipe longitudinally extending between said indicator lamp and said viewfinder lens for transmitting illumination from the indicator lamp towards the viewfinder lens to be observed when looking through the viewfinder lens.

2. A single-use camera as recited in claim 1, wherein said inner body and said outer casing have respective aligned openings located close to said indicator lamp to view illumination provided by the indicator lamp without looking through said viewfinder lens.

3. A single-use camera as recited in claim 1, wherein the inside of said outer casing is coated with a light-absorbent substance at least in the vicinity of said light pipe to prevent ambient light received through said viewfinder lens from reflecting off said inside onto the light pipe.

4. A single-use camera as recited in claim 3, wherein said light-absorbent substance is dull black to reflect little or no ambient light.

5. A single-use camera as recited in claim 1, wherein said non-opaque portion is translucent except for said viewfinder lens and said light pipe.
